# EUROPEAN PATENT SPECIFICATION

(11) **EP 0 409 958 B1**
(45) Date of publication and mention of the grant of the patent: **15.06.1994**
(21) Application number: 90903241.9
(22) Date of filing: 15.02.1990
(51) Int. Cl.: G02F 1/133

(54) **NEMATIC LIQUID CRYSTAL DEVICE**
NEMATISCHE FLÜSSIGKRISTALLANORDNUNG
DISPOSITIF A CRISTAL LIQUIDE NEMATIQUE

(30) Priority: 16.02.1989 SE 8900562; 06.03.1989 SE 8900777
(43) Date of publication of application: 30.01.1991
(73) Proprietor: S.A.R.L. S.T. Lagerwall, F-83150 Bandol (FR)
(72) Inventor: ANDERSSON, Gunnar, S-411 29 Göteborg (SE); KOMITOV, Lachezar, S-411 29 Göteborg (SE); LAGERWALL, Sven, Torbjörn, S-414 75 Göteborg (SE); STEBLER, Bengt, S-412 66 Göteborg (SE); FLATISCHLER, Kurt, S-602 49 Boras (SE)
(74) Representative: Grennberg, Erik Bertil
(86) International application number: SE9000101
(87) International publication number: WO9009613

(56) References cited:
- DE-A- 3 711 360
- PHYSICAL REVIEW LETTERS, vol. 62, no. 7, February 1989 (New York), Z. Li et al. : "Linear Electroclinic Effect in a Chiral Nematic Liquid Crystal"

## Description

### BACKGROUND AND DESCRIPTION OF PRIOR ART

Conventional liquid crystal devices, as exemplified by twisted nematic or supertwist nematic devices, utilize a quadratic electrooptic effect, i.e. an effect sensitive to the magnitude but not to the sign of an applied electric field. The response of the liquid crystal material to the external field is, in this case, of dielectric nature, and the decisive material parameter is the dielectric anisotropy, that is, the difference between the value of the dielectric constant along the long molecular axis and the value perpendicular to that axis, which is also the optic axis. According to whether this anisotropy is positive or negative, an applied electric field will have the tendency to align the material in such a way that the optic axis is along or perpendicular to the field, respectively. According to its nature, this response increases proportional to E², the square of the applied field.

Since about a decade a radically different liquid crystal technology is growing based on ferroelectric liquid crystals, first described by R.B.Meyer et al. in Journal de Physique, volume 36, pages L69 to L71, 1975. The first ferroelectric liquid crystal patent described the so-called surface-stabilized ferroelectric liquid crystal (SSFLC) and was filed by N.A.Clark and S.T.Lagerwall in 1980 and issued in 1983 as U.S.Patent No. 4, 367,924. The corresponding first announcement of high speed liquid crystal devices was made by the same authors in Applied Physics Letters, volume 36, pages 899 to 901, 1980. In these devices which are characterized by microsecond or submicrosecond speed, and by the completely new feature of symmetric bistability, the active electro-optic effect is a linear one, i.e. sensitive to the sign of the field. Whereas in a twisted nematic device the two distinct optical states are characterized by the field being ON or OFF, the SSFLC device can be driven between its two distinct states by changing the sign of the applied electric field.

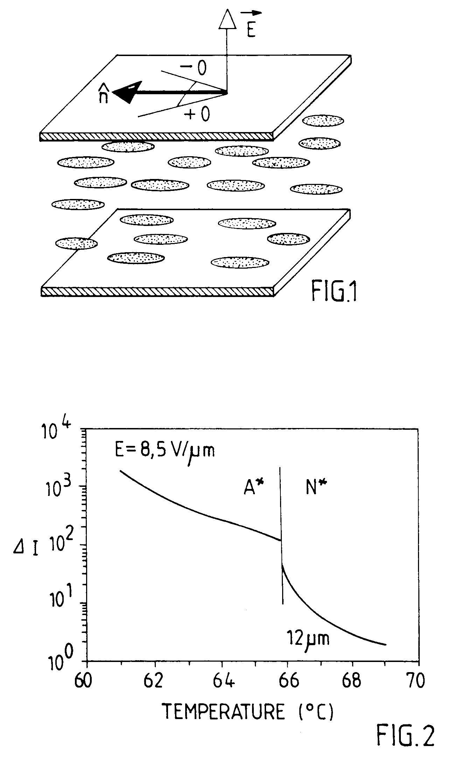

Later linearly responding devices without bistability were described by Lagerwall et al. in U.S.Patent No. 4, 838, 663, filed in 1987. The devices use different liquid crystal phases, being orthogonal smectics rather than tilted smectics used in the ferroelectric devices. These paraelectric phases, similar to the solid crystal case, typically exhibit a so called soft mode, which is detectable as a pretransitional effect immediately before entering the ferroelectric phase. In the liquid crystal case such an effect was described first by S.Garoff and R.B.Meyer in Physical Review Letters, volume 38, page 848, from 1977 and they coined the word electroclinic for the response. This response means that the molecular axis n̂, which is also the optic axis, rotates a certain angle ϑ, when an electric field is applied perpendicular to n̂, cf. Figure 1. When the field direction is inversed, the induced tilt angle is in the opposite sense. The induced tilt ϑ is proportional to 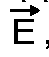 , but in the case of Garoff et al., so small that it requires phase sensitive methods for even being detected. In U.S.Patent No.4, 838, 663, which uses a different geometric configuration and explores a different temperature regime, the induced tilt is orders of magnitude larger and the effect is also distinguished by the fact that the response time is independent of the applied field, which makes the field an excellent control variable for ϑ and thereby for a grey scale in devices up to very high frequencies.

Recently it has been discovered that the electroclinic effect can be detected not only in the orthogonal smectic phase, but also in the higher-lying nematic phase, that is in the very opposite regime to that investigated by Garoff et al. This was first reported by one of the authors (Komitov) at the International Conference on Optics and Interfaces in Liquid Crystals, held in Torino, October 14-20, 1988; cf.Figure 2. Independently, the same finding was reported by Z.Li,R.Petschek and C.Rosenblatt in the Physical Review Letters, volume 62, pages 796 to 799, 1989. Although the induced tilt is larger in both these cases as compared with the Garoff et al. case, it is still by far too small to be useful in any practical device, being of the order of 10⁻² degrees. In order to apply the electroclinic effect to any nematic device, the response has to be amplified by at least two orders of magnitude. In recognizing that, for its utilizability, the phenomenon depends on surface control, we have been able to find means to make it useful for device applications.

A liquid crystal device according to the present invention is as claimed in claim 1.

Preferred embodiments are recited in dependent claim 2-5.

### BRIEF DESCRIPTION OF THE DRAWINGS

In the drawings:
FIG.1 is a view of the nematic liquid crystal in planar orientation contained between the confining glass plates, the long axes of molecules lying along the preferred (electric field E = 0) direction. n̂ describes the molecular orientation, ± ϑ is the n̂ position at fields E ≠ 0.
FIG.2 is taken from the first presentation of an electroclinic effect in the nematic phase (Komitov et.al., Torino 1988), the figure showing the optical response (the amplitude of the light intensity modulation ΔI) in the A* and N* phases of ZLI-3488 (by Merck) versus temperature for cells of thickness 12 »m at constant applied field strength E.
FIG.3 is the same cell as in figure 1, now illustrating details of plate treatment like deposited conducting layers (here ITO) and molecule orienting layers (here a polymer), the latter being rubbed to ensure a preferred direction of the molecules' orientation equal to the coupled optic axis n̂ at zero electric field.
FIG.4 shows the induced molecular orientation deviation ϑ from the preferred (zero field) direction, as a function of applied voltage at 82 °C, in the compound 4-(9S, 3S, epoxyhexyloxy) phenyl-4'-decyloxybensoate.
FIG.5 is the simultaneous oscilloscope registration of the optical response (large amplitude curve) and the applied electric field (small amplitude curve) in the compound of figure 4, both figures thus illustrating the linear dependence of response on field (arbitrary units).
FIG. 6 shows the induced tilt in the case of the compound of Figure 4, illustrating the role played by weakening the anchoring conditions. Here, the softer version was achieved by pretreating the surface with SiO₂, followed by buffing and subsequent deposition of MBBA, that is in its isotropic phase at the working temperature range of the cell.
FIG. 7 shows the induced tilt as a function of applied voltage, in the case of soft boundary condition (material and conditions as in Figure 6)
FIG.8 is the frequency characteristic of the soft boundary condition case, corresponding to Figures 6 and 7.

### DESCRIPTION OF DEVICE PRINCIPLE AND EMBODIMENTS

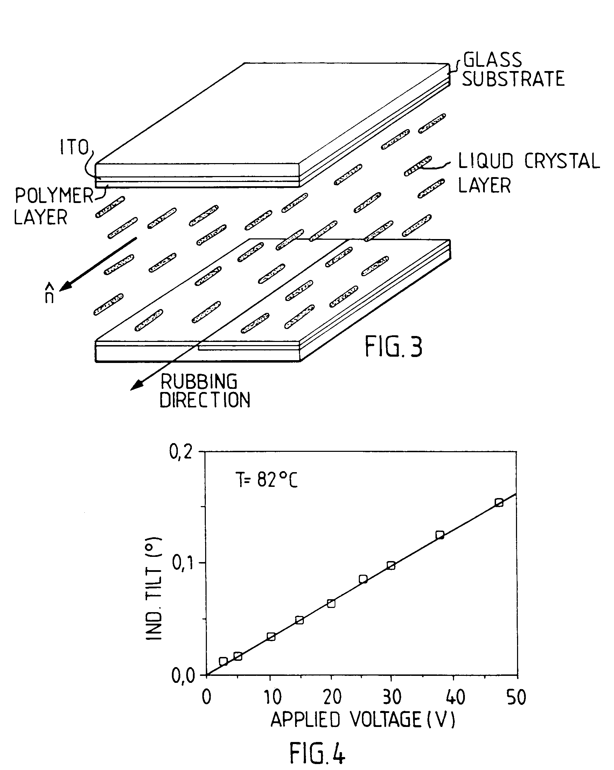

To induce the electroclinic effect in a nematic liquid crystal the following conditions have to be satisfied. First the material has to be chiral, i.e. lacking reflection symmetry. The chiral nematic (N*) must further be characterized by having its (naturally occurring) helix unwound. It is thus a non-helical chiral nematic, also called an infinite-pitch chiral nematic. Such a chiral nematic can also be called pitch-compensated. Pitch compensation is achieved, e.g., by doping or mixing N* with soluble chiral substances until the helix vanishes. For practical purposes a vanishing helix means that the actual pitch or periodicity p has to be much larger than the cell gap d. Finally the optic axis has to be aligned by surface action from the bounding surfaces so that a non-ambiguous direction n̂ is imposed everywhere in the bulk. Such an alignment can, for instance, be achieved by coating the glass plates adjacent to the liquid crystal with a polymer layer which is then rubbed along one direction that will in the filled cell define the n̂ direction, cf. Figure 3. This may sound as a trivial statement because this is the conventional method of aligning liquid crystals. However, the important difference between the electroclinic effect in the smectic A* phase and in the nematic N* phase is that in the smectic there is a thermodynamic bulk torque restoring the optic axis to the zero field direction. In the nematic phase there is no such restoring or counteracting torque because there is no intrinsic zero direction. Therefore both these features have to be supplied from the surfaces. By incorrectly attributing the response to a pure bulk effect, Li et al also deprive themselves of the possibility of influencing the magnitude of the effect. However, by diminishing the counteracting torque, the response can be magnified by orders of magnitude. This is done by, generally speaking, loosening the anchoring conditions as much as possible while still letting the weak anchoring define a preferred (zero field) direction in the bulk of the material.

A certain exception to this case is given by polymer chiral nematic phases because once the main polymer is aligned the backbone will serve to define a kind of internal direction given without reference to further boundaries.

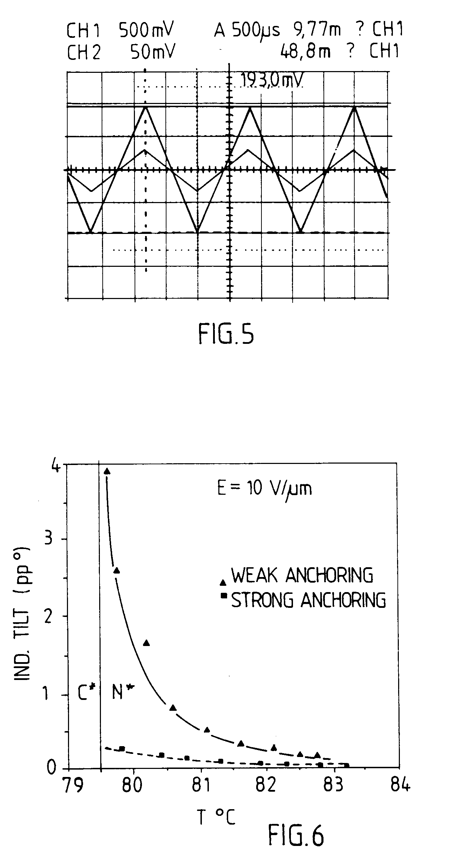

If under these conditions, an electric field 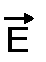 is applied across the liquid crystal film, i.e. perpendicular to n̂, or more or less so, i.e. the field must have at least some component perpendicular to n̂, then the optic axis will swing out perpendicular to both n̂ and 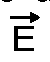 either counter- or clockwise (cf. Figure 1). The angular swing ϑ is proportional to the applied voltage for not too large deflections ϑ. Different demonstrations of the linearity of the response are given in the Figures 4 and 5.

The soft boundary conditions can be achieved in the following ways. The glass plates including deposited electrodes are first coated with suitable aligning layers (e.g. polyimide, polyamide etc), whereafter these are treated to ensure a preferred direction of the molecular alignment (e.g. by rubbing), followed by further treatment to ensure softening of the torsional anchoring (i.e. the restoring torque from ± ϑ back to the preferred direction). The latter is achieved e.g. by further covering the aligning layer with a liquid crystal (nematic, yet isotropic at the working temperature range of the cell), or with a different material leading to the same desired softening.

A different way to achieve the soft condition is by coating one or both surfaces with an agent provoking the homeotropic boundary condition, i.e. one in which the molecules align perpendicular to the bounding surface. Examples of such agents are lecithin or quilon. Before treatment with lecithin or quilon one or both surfaces may be treated for obtaining unidirectional alignment, by buffing, or by oblique evaporation of for instance SiO. If the dielectric anisotropy of the chiral nematic liquid crystal is negative, the same alignment condition as before can be obtained by applying a holding field to the sample, for instance of 100 kHz frequency. In this case the optic axis turns parallel to the plates, except in a very thin boundary layer near the surface, and extremely weak directional preferences in the surface are sufficient to sort out the zero direction parallel to the plates. In fact no previous treatment for unidirectional alignment may be necessary as already the action of filling the cell in the isotropic phase is usually sufficient for this.

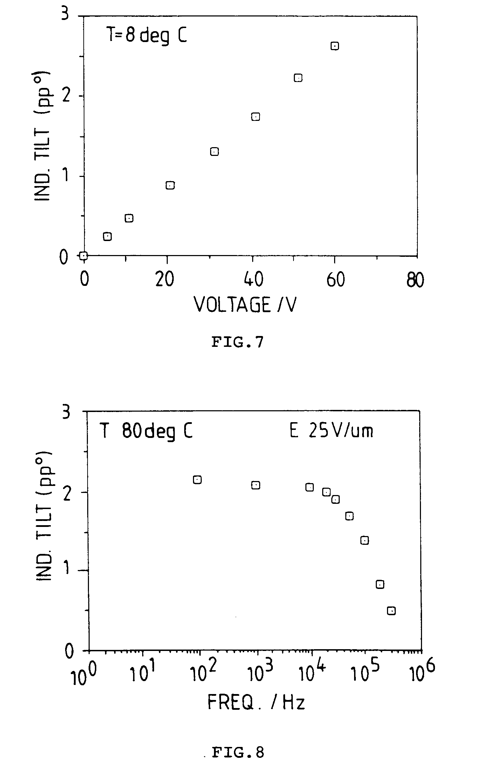

An example of the induced tilt and its linearity in the case of soft (weak anchoring) boundary conditions is shown in Figures 6 and 7, respectively (in Figure 6, for comparison, the induced tilt is also shown in a stronger anchoring case). The corresponding frequency characteristic is shown in Figure 8.

Near the N*-A* or N*-C* transition temperature the nematic cell can be switched in a different electro-optic mode. As the field is increased it may induce the transition to the A* or C* phase. By this transition the electro-optic effect is enhanced considerably. Usually applied fields of the order of 30 volts/»m are sufficient to induce these transitions.

In the previous section we pointed out that in the A* phase as in all smectic phases, there is a restoring thermodynamic torque which is an intrinsic property of the bulk. The absense of this torque in the N* phase can be utilized to give the N* device a certain capacity of being multiplexed. Whereas in the A* phase the relaxation back to the initial state is as rapid as the active switching, in the nematic case only the wellknown weak nematic torque is active when the field is taken off. This means that a number of lines in a matrix may be written before any noticeable degradation of the written information can be perceived.

## Claims

1. A liquid crystal device comprising first and second oppositely arranged glass plates, respective electrodes deposited inwardly on the glass plates, respective alignment layers coated on the electrodes and an unwound non helical chiral nematic liquid crystal (N*) with molecular axis parallel to the glass plates disposed between the alignment layers, the device being arranged such that in use a tilt deriving from an electroclinic effect is induced in molecules of the nematic crystal by application of an applied electric field perpendicular to the glass plates characterised by a further layer covering at least one alignment layer and comprising either a different nematic liquid crystal which is isotropic at device operating temperatures or a substance inducing molecular alignment perpendicular to the further layer.

2. A device according to claim 1 comprising means for rendering said tilt visible, said means comprising polarisers, retarders, reflectors, dyes doped in the liquid crystal or a combination thereof.

3. A device according to claim 1 or claim 2 comprising matrix addressing means.

4. A device according to any one of the preceding claims, wherein said chiral nematic liquid crystal is in the polymer liquid crystal state.

5. A device according to any one of the preceding claims, wherein said applied electric field induces the transition
N* -> A* or N* -> C* or N* -> A* -> C*.

## Patentansprüche

1. Flüssigkristall-Vorrichtung, die eine erste und eine zweite Glasplatte aufweist, die einander gegenüberliegend angeordnet sind, zugehörige Elektroden, die innen auf den Glasplatten vorgesehen sind, zugehörige Ausrichtungsschichten, mit denen die Elektroden beschichtet sind, sowie einen abgewickelten, nicht-spiralförmigen, chiralen, nematischen Flüssigkristall (N*), dessen Molekülachse parallel zu den Glasplatten verläuft, die zwischen den Ausrichtungsschichten angeordnet sind, wobei die Vorrichtung so ausgebildet ist, daß in ihrem Betrieb ein von einem elektroklinen Effekt herrührendes Kippen in Molekülen des nematischen Kristalls durch Anlegen eines angelegten elektrischen Feldes senkrecht zu den Glasplatten induziert wird, gekennzeichnet durch eine weitere Schicht, die zumindest eine Ausrichtungsschicht abdeckt und entweder einen unterschiedlichen nematischen Flüssigkristall aufweist, der bei den Betriebstemperaturen der Vorrichtung isotrop ist, oder eine Substanz, die eine Molekülausrichtung senkrecht zur weiteren Schicht induziert.

2. Vorrichtung nach Anspruch 1, welche eine Einrichtung zur Sichtbarmachung des Kippens aufweist, wobei die Einrichtung Polarisatoren, Verzögerer, Reflektoren, in den Flüssigkristall eindotierte Farbstoffe oder eine Kombination dieser Elemente umfaßt.

3. Vorrichtung nach Anspruch 1 oder Anspruch 2, welche eine Matrix-Adressiereinrichtung aufweist.

4. Vorrichtung nach einem der voranstehenden Ansprüche, bei welcher sich der chirale, nematische Flüssigkristall in dem Polymer-Flüssigkristallzustand befindet.

5. Vorrichtung nach einem der voranstehenden Ansprüche, bei welcher das angelegte elektrische Feld folgenden Übergang induziert
N* -> A* oder N* -> C* oder N* -> A* -> C*.

## Revendications

1. Dispositif à cristal liquide, comprenant des première et seconde plaques de verre placées en vis-à-vis, des électrodes respectives déposées sur l'intérieur des plaques de verte, des couches respectives d'alignement qui recouvrent les électrodes et un cristal liquide (N*), nématique, chiral, à hélice déroulée, d'axe moléculaire parallèle aux plaques de verre, placés entre les couches d'alignement, le dispositif étant conçu de telle façon que lors de l'utilisation un basculement, dérivant d'un effet électroclinique, est induit dans des molécules du cristal nématique par application d'un champ électrique perpendiculairement aux plaques de verre, caractérisé par une couche supplémentaire qui recouvre l'une au moins des couches d'alignement et qui contient soit un cristal liquide nématique différent, isotropique aux températures de fonctionnement du dispositif, soit une substance induisant un alignement moléculaire perpendiculaire à la couche supplémentaire.

2. Dispositif selon la revendication 1, comprenant un moyen pour rendre visible ledit basculement, ledit moyen comprenant des polariseurs, des retardateurs, des réflecteurs, des colorants introduits dans le cristal liquide ou une combinaison de ceux-ci.

3. Dispositif selon la revendication 1 ou 2, comprenant un moyen d'adressage de matrice.

4. Dispositif selon l'une quelconque des précédentes revendications, dans lequel ledit cristal liquide nématique chiral est à l'état de cristal liquide polymère.

5. Dispositif selon l'une quelconque des précédentes revendications dans lequel ledit champ électrique appliqué induit la transition:
N* -> A* ou N* -> C* ou N* -> A* -> C*.
